# EUROPÄISCHE PATENTSCHRIFT

(11) **EP 2 831 970 B1**
(45) Veröffentlichungstag und Bekanntmachung des Hinweises auf die Patenterteilung: **01.02.2017**
(21) Anmeldenummer: 13711350.2
(22) Anmeldetag: 20.03.2013
(51) Int. Cl.: H02G 3/08, H02G 3/14

(54) **SYSTEMMODUL FÜR DIE GEBÄUDE-ELEKTROINSTALLATIONSTECHNIK UND TÜRKOMMUNIKATIONSTECHNIK**
SYSTEM MODULE FOR ELECTROINSTALLATION TECHNOLOGY FOR BUILDINGS AND DOOR COMMUNICATION TECHNOLOGY
MODULE SYSTÈME POUR LA TECHNIQUE D'INSTALLATION ÉLECTRIQUE D'UN BÂTIMENT ET LA TECHNIQUE DE COMMUNICATION DE PORTE

(30) Priorität: 28.03.2012 EP 12161654
(43) Veröffentlichungstag der Anmeldung: 04.02.2015
(73) Patentinhaber: Gira Giersiepen GmbH & Co. Kg, 42477 Radevormwald (DE)
(72) Erfinder: SCHIEFFER, Klaus, 51375 Leverkusen (DE)
(74) Vertreter: Patent- und Rechtsanwälte Dr. Solf & Zapf
(86) Internationale Anmeldenummer: PCT/EP2013/055774
(87) Internationale Veröffentlichungsnummer: WO 2013/143930

(56) Entgegenhaltungen:
- WO-A1-2008/023102
- DE-A1-102006 040 686
- DE-A1-102010 016 345
- US-B1- 7 323 638

## Beschreibung

Die vorliegende Erfindung betrifft ein Systemmodul für die Gebäude-Elektroinstallations- und Türkommunikationstechnik, bestehend aus einem Moduluriterteil und einem mit diesem lösbar verbundenen Funktionsoberteil, wobei das Modulunterteil zum Befestigen an einem Systemträger dient.

Weiterhin bezieht sich die vorliegende Erfindung auf eine Systemmodulanordnung aus mehreren Systemmodulen der vorstehend beschriebenen Art.

Bei den bekannten Systemmodulen, wie elektrischen Schaltern, Klingeltastern, Lautsprecher- oder Kameramodulen, sind das Modulunterteil und das Funktionsoberteil derart ausgebildet, dass das Modulunterteil an das Funktionsoberteil angepasst ist, weshalb die verwendeten Modulunterteile nicht einheitlich sind. Zudem handelt es sich hierbei um Systemmodule, bei denen ein äußerer Abdeckrahmen verwendet wird, der in Abhängigkeit von der Anzahl der Module in seiner Größe variiert. Auch ist es bekannt, insbesondere metallische Oberflächen für modulare Systeme zu bilden, indem diese durch einstückige, insbesondere metallische Frontplatten abgedeckt werden oder wobei die einzelnen Systemmodule durch Öffnungen der Frontplatten hindurchgesteckt werden, so dass die Modulrahmen auf der einstückigen Frontplatte aufliegen. Siehe hierzu zum Beispiel DE 10 2006 040 686 A1 oder DE 10 2010 016 345 A1.

Bei den bekannten Systemen ist die Verdrahtung der einzelnen Systemmodule montageaufwändig, da der Monteur vor Ort jeweils die erforderlichen Anschlussleitungen konfektionieren muss oder er verwendet vom Hersteller vorkonfektionierte Kabel, wobei für jede Modulverbindung ein speziell angepasstes Kabel erforderlich ist. Dies ist jedoch zeit- und kostenaufwändig und zudem ergibt sich hieraus ein erhöhter Platzbedarf für die Unterbringung der Anschlussleitungen.

Der vorliegenden Erfindung liegt die Aufgabe zu Grunde, Systemmodule der eingangs beschriebenen Art derart zu verbessern, dass eine platzsparende Modulbauweise erreicht wird, und eine Trennung von Modulunterteil und Funktionsoberteil derart gegeben ist, dass einheitliche Modulunterteile verwendbar sind. Zudem soll eine platzsparende und kostengünstige Anschlusstechnik möglich sein und es soll eine rahmenlose, flächenbündige Oberfläche im montierten Zustand der Systemmodule erreicht werden.

Erfindungsgemäß wird dies dadurch erreicht, dass das Modulunterteil ein quaderförmiges Bodenteil aufweist, in dem ein Schaltungsträger mit seiner elektronischen Schaltung aufgenommen ist, wobei der Schaltungsträger einseitig zwei Mehrfachkontakte für einen Anschluss einer Busleitung aufweist, und die Mehrfachkontakte derart elektrisch belegt sind, dass sie sowohl Eingangskontaktstellen als auch Ausgangskontaktstellen für eine elektrische Signalverarbeitung und eine Spannungsversorgung bilden und wobei die Mehrfachkontakte über Öffnungen im Bodenteil zugänglich sind und an vorbestimmten, von der Modulfunktion unabhängigen Positionen systemeinheitlich an dem Schaltungsträger befestigt sind, wobei die Öffnungen innerhalb sich rechtwinklig kreuzender Leitungskanäle zur Aufnahme der Busleitungen angeordnet sind und die Mehrfachkontakte senkrecht zur mittleren Längsachse der Leitungskanäle ausgerichtet sind, wobei die Leitungskanäle derart angeordnet sind, dass sie eine Bodenfläche des Systemmoduls mittig unterteilen oder asymmetrisch angeordnet sind, wobei sie mit ihrer mittleren Längsachse jeweils um ein Maß zur Mittelsenkrechten auf Längsseiten des Modulunterteils verlaufen.

Durch die erfindungsgemäße Ausführung werden die Design- und Bedienoberflächen von den Funktionen getrennt, so dass sich eine Oberflächenvielfalt mit Verwendung derselben Modulunterteile ergibt. Zudem ergibt sich eine integrierte Bus-Anschlusstechnik.

Es besitzt mindestens einer der Leitungskanäle eine Tiefe, die einer zweifachen Dicke der als Stegleitungen ausgebildeten Busleitungen beträgt. Die an den Busleitungen vorgesehenen Gegenkontakte sind vorzugsweise als Schneid-Klemmkontakte ausgebildet, so dass sich eine einfache Anschlusstechnik ergibt.

Weiterhin ist es erfindungsgemäß zweckmäßig, wenn das Bodenteil eine an seinem Randbereich ausgebildete, umlaufende Anlagefläche für den Systemträger aufweist, wobei zweckmäßigerweise die Leitungskanäle in einem gegenüber dem die Anlagefläche bildenden Randbereich unter Ausbildung einer Stufe vorstehenden Bodenansatz ausgebildet sind. Der erfindungsgemäße Bodenansatz weist eine quadratische Form auf und diese ist derart bemessen, dass sie in sechzehn gleich große quadratische Teilflächen unterteilt werden kann, wobei die Seitenkantenlänge jeder Teilfläche einem modulspezifischem Rastermaß entspricht, das vorzugsweise 17,75 mm beträgt. Hierauf ergibt sich ein Stichmaß für den Bodenansatz von 71 mm. Aus dieser erfindungsgemäßen Ausgestaltung ergibt sich die Möglichkeit, die Gegenkontakte der elektrischen Busleitung ebenfalls in einem festen, diesem Rastermaß angepassten Maß vorzukonfektionieren, so dass die erfindungsgemäß verwendete Busleitung beispielsweise bereits als Rollenware mit den jeweiligen Schneid-Klemmkontakten versehen hergestellt werden kann, so dass vor Ort der Monteur nur noch entsprechend der Anzahl der verwendeten Systemmodule eine Ablängung der vorkonfektionierten Busleitung vornehmen muss. Hierbei ergibt sich durch die erfindungsgemäße Ausgestaltung auch eine besonders platzsparende Unterbringung der Busleitung im Bereich der Bodenplatte.

Weiterhin ist es erfindungsgemäß vorteilhaft, wenn der die Anlagefläche bildende Randbereich eine Breite besitzt, die mindestens dem halben erfindungsgemäßen Rastermaß, insbesondere 8,875 mm entspricht und das Modulunterteil einen umfangsgemäßen angeformten Rahmenabschnitt aufweist, der gegenüber dem quaderförmigen Bodenteil allseitig um dasselbe Überstandsmaß C übersteht, wobei dieses Überstandsmaß C und die Breite B des Randbereichs der Anlagefläche derart ausgebildet sind, dass die Summe aus beiden Maßen dem erfindungsgemäßen Rastermaß, insbesondere 17,75 mm entspricht. Erfindungsgemäß wird somit im Systemträger eine rahmenlose flächenbündige Montage der erfindungsgemäßen Systemmodule ermöglicht, da eine erfindungsgemäße Systemmodulanordnung aus einem Systemrahmenteil besteht, in dem mehrere quadratische, gleich große Rahmenöffnungen in einer Reihe liegend ausgebildet sind, deren Mittenabstand dem sechsfachen Rastermaß und deren Seitenlänge dem vierfachen Rastermaß entspricht, wobei der Systemträger einen umfänglichen Randabschnitt an jeder Rahmenöffnung als Anlagebereich aufweist.

Vorteilhafte Ausführungen der Erfindung sind in den Unteransprüchen enthalten und werden an Hand der in den beiliegenden Zeichnungen dargestellten Ausführungsbeispiele näher erläutert. Es zeigen:
- Fig. 1: eine Explosionsdarstellung eines erfindungsgemäßen Funktionsmoduls im nicht zusammengesetzten Zustand,
- Fig. 2: eine Rückansicht eines erfindungsgemäßen Funktionsmoduls gemäß Fig. 1,
- Fig. 3: eine Seitenansicht des Funktionsmoduls gemäß Fig. 2,
- Fig. 4: eine Rückansicht auf eine erfindungsgemäße Systemmodulanordnung,
- Fig. 5: eine weitere Ausführung einer erfindungsgemäßen Systemmodulanordnung in Rückansicht im zusammengesetzten Zustand,
- Fig. 6: einen Schnitt durch eine erfindungsgemäße Modulanordnung montiert in einem Unterputzgehäuse,
- Fig. 7: einen Schnitt durch eine erfindungsgemäße Modulanordnung montiert in einem Aufputzgehäuse,
- Fig. 8: einen Schnitt durch eine erfindungsgemäße Modulanordnung montiert in einem freistehenden Gehäuse,
- Fig. 9: eine perspektivische Ansicht eines erfindungsgemäßen Systemträgers mit einem Riegelverschluss mit einem Unterputzgehäuse,
- Fig. 10: eine Teilansicht aus Fig. 9 in vergrößerter Darstellung,
- Fig. 11: eine Rückansicht eines erfindungsgemäßen Funktionsmoduls gemäß Fig. 1, jedoch in geänderter Ausführungsform und
- Fig. 12: eine erfindungsgemäße Systemmodulanordnung in Rückansicht im zusammengesetzten Zustand mit einem Funktionsmodul gemäß Fig. 10.

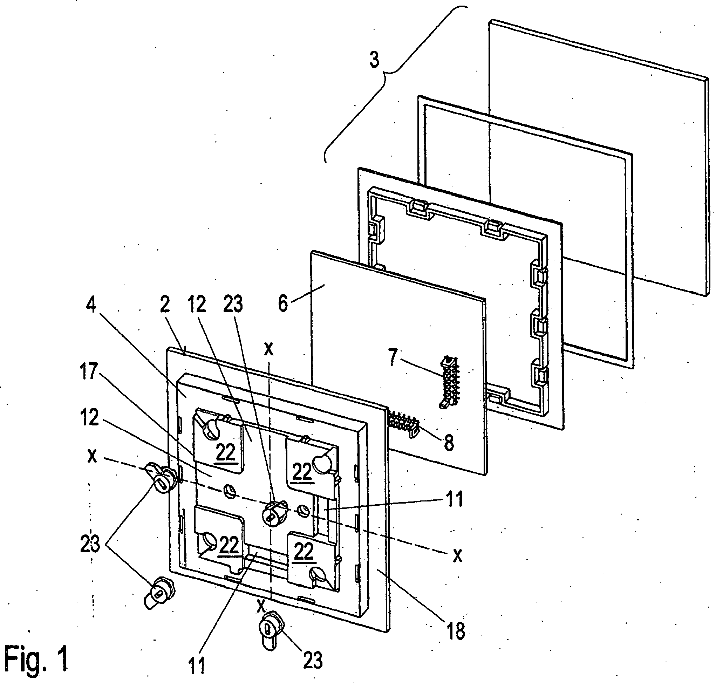

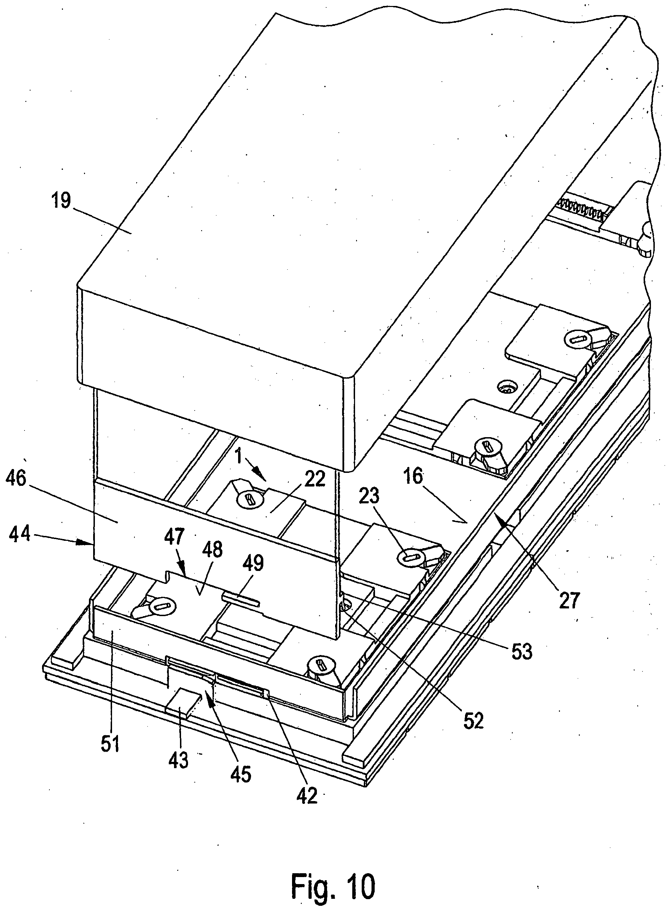

In den Fig. 1 bis 12 sind gleiche Teile bzw. funktionsgleiche Teile mit denselben Bezugszeichen gekennzeichnet. Sofern bestimmte beschriebene und/oder aus den Zeichnungen entnehmbare Merkmale des erfindungsgemäßen Systemmoduls oder seiner Bestandteile nur im Zusammenhang mit einem Ausführungsbeispiel beschrieben sind, sind diese aber auch gemäß der Erfindung unabhängig von diesem Ausführungsbeispiel als Einzelmerkmal oder aber auch in Kombination mit anderen Merkmalen der einzelnen Ausführungsbeispiele wesentlich und werden als zur Erfindung gehörig beansprucht.

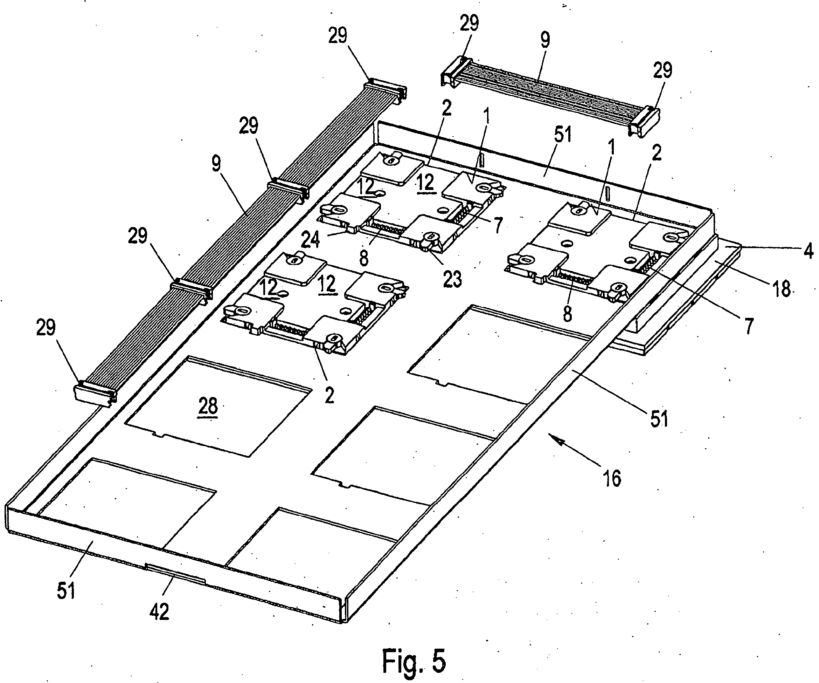

Ein erfindungsgemäßes Systemmodul 1 besteht aus einem Modulunterteil 2 und einem mit diesem lösbar, z. B. über eine Rastverbindung verbindbaren Funktionsoberteil 3. Das Modulunterteil 2 besteht aus einem quaderförmigen Bodenteil 4, in dem ein Schaltungsträger 6 mit seiner elektronischen Schaltung aufgenommen wird. Auf der dem Modulunterteil 2 gegenüberliegenden Seite des Schaltungsträgers 6 wird dieser von dem Funktionsoberteil 3 abgedeckt, so dass der Schaltungsträger 6 zwischen dem Modulunterteil 2 und dem Funktionsoberteil 3 eingeschlossen ist. Der Schaltungsträger 6 weist einseitig zwei Mehrfachkontakte 7, 8 auf. Diese Mehrfachkontakte 7, 8 dienen zum Anschluss einer Busleitung 9, siehe Fig. 5. Die Mehrfachkontakte 7, 8 sind derart elektrisch belegt, dass diese sowohl Eingangskontaktstellen als auch Ausgangskontaktstellen für eine elektrische Signalverarbeitung und eine elektrische Spannungsversorgung bilden, und wobei die Mehrfachkontakte 7, 8 über Öffnungen 11 im Bodenteil 4 zugänglich sind. Das Modulunterteil 2 ist vorteilhafterweise als Kunststoffspritzgussteil ausgebildet. Bei dem Schaltungsträger 6 handelt es sich um eine an sich bekannte Leitungsplatine, auf der die erforderlichen elektronischen Bauteile befestigt sind.

Die Öffnungen 11 sind innerhalb sich rechtwinklig kreuzender Leitungskanäle 12 zur Aufnahme der Busleitungen 9 angeordnet. Die Mehrfachkontakte 7, 8 sind vorzugsweise als Reihenkontakte ausgebildet und sind derart ausgerichtet, dass sie senkrecht zu einer mittleren Längsachse X-X der Leitungskanäle 12 verlaufen. Hierbei entspricht zweckmäßigerweise die Längserstreckung der Mehrfachkontakte 7, 8 der Breite der Leitungskanäle 12. Weiterhin ist es zweckmäßig, wenn mindestens einer der Leitungskanäle eine Tiefe besitzt, die einer zweifachen Dicke der als Stegleitungen ausgebildeten Busleitungen 9, 10 entspricht. Vorteilhafterweise weisen beide Leitungskanäle 12 eine derartige Tiefe auf. Hierdurch wird erreicht, dass die Leitungskanäle 12 die Busleitung 9 vollständig aufnehmen und diese vollständige Aufnahme auch bei einer kreuzenden Anordnung der Busleitungen 9 vorhanden ist, so dass die Busleitungen 9 nicht über das Modulunterteil 2 vorragen. Hierdurch wird eine flache Konstruktionshöhe des verschalteten Systemmoduls 1 bewirkt. Die Leitungskanäle 12 können, wie in Fig. 1 dargestellt ist, symmetrisch angeordnet sein, indem sie die Bodenfläche des Bodenansatzes 17 jeweils mittig teilen. Hierbei verlaufen die Leitungskanäle 12 senkrecht zur jeweiligen Begrenzungskante des Bodenansatzes 17.

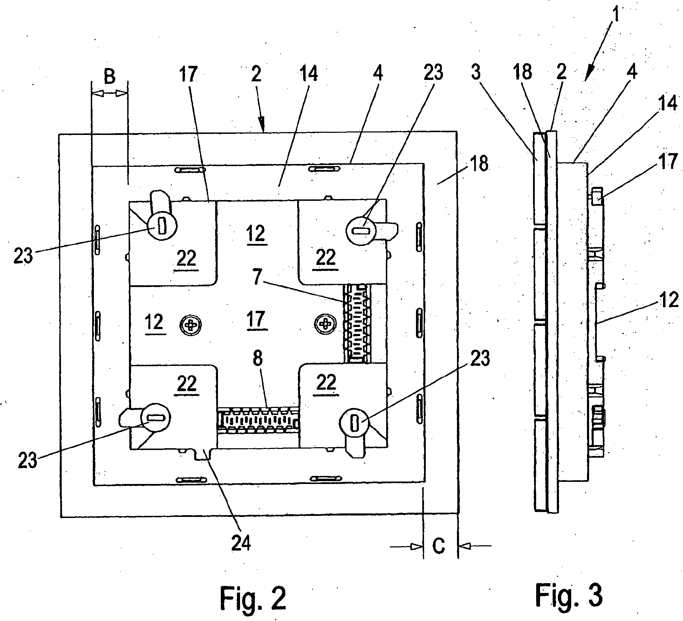

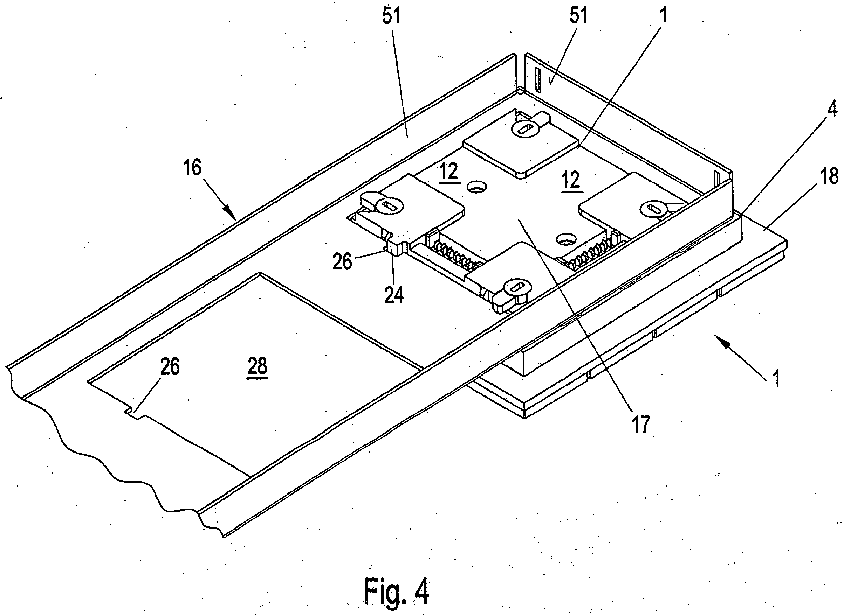

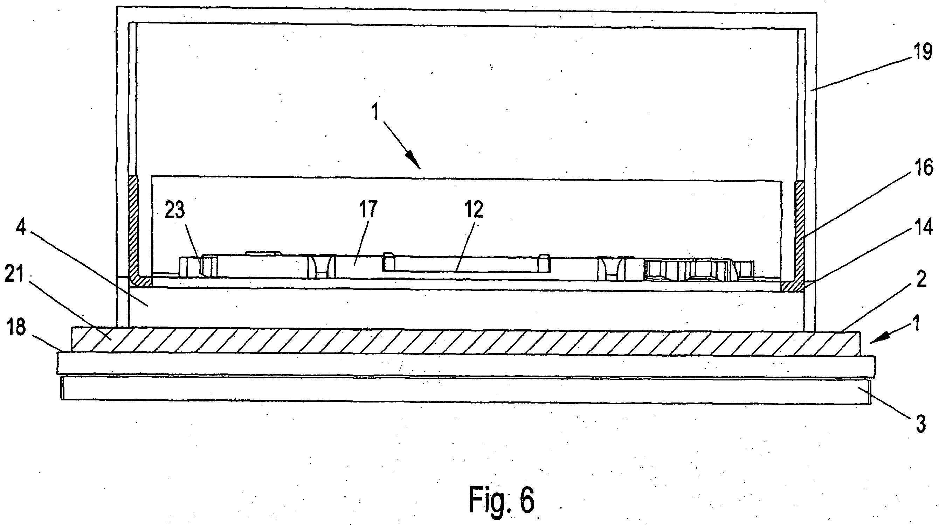

Das Bodenteil 4 weist eine an seinem Randbereich ausgebildete, umlaufende Anlagefläche 14 für einen Systemträger 16 auf, wozu auf Fig. 4 und 5 verwiesen wird. Hierbei handelt es sich um einen Systemträger 16 z. B. für die Unterputzmontage erfindungsgemäßer Systemmodule 1. Diese Systemträger 16 werden z. B. in einem Unterputzgehäuse befestigt. Auf Grund der erfindungsgemäßen Ausgestaltung des Modulunterteils 2 mit den hierin integrierten Busleitungen 9 ergibt sich eine geringe Konstruktionshöhe des Modulunterteils 2, so dass auch das den Systemträger 16 aufnehmende Gehäuse flach ausgeführt werden kann. Die Leitungskanäle 12 sind in einem gegenüber dem die Anlagefläche 14 bildenden Randbereich unter Ausbildung einer Stufe innerhalb eines vorstehenden Bodenansatzes 17 ausgebildet. Zweckmäßigerweise ist die Stufenhöhe des Bodenansatzes 17 größer/gleich einer Materialdicke des an der Anlagefläche 14 anliegenden Systemträgers 16. Der Bodenansatz 17 besitzt eine quadratische Form und seine Bodenfläche ist derart bemessen, dass sie insbesondere in sechzehn gleich große quadratische Teilflächen unterteilt werden kann, wobei die Teilflächen eine Seitenkantenlänge entsprechend einem modulspezifischen Rastermaß besitzen. Vorteilhafterweise beträgt dieses modulspezifische Rastermaß 17,75 mm, woraus sich ein Stichmaß für den vorstehenden Bodenansatz 17 von 71 mm ergibt. Der die Anlagefläche 14 bildende Randbereich besitzt zweckmäßigerweise eine Breite B, die mindestens dem halben Rastermaß, insbesondere 8,875 mm beträgt. Weiterhin ist zweckmäßigerweise vorgesehen, dass das Modulunterteil 2 einen umfangsgemäßen Rahmenabschnitt 18 aufweist, der gegenüber dem quaderförmigen Bodenteil 4 allseitig um ein einheitliches Überstandsmaß C übersteht. Durch die erfindungsgemäße Dimensionierung ergibt sich, dass das gesamte Systemmodul 1 ebenfalls entsprechend der Ausbildung des quadratischen Bodenansatzes 17 ebenfalls quadratisch ist. Weiterhin ist es zweckmäßig, wenn die Summe aus dem Überstandsmaß C und der Breite B der Anlagefläche 14 dem Rastermaß entspricht und insbesondere 17,75 mm beträgt. In Fig. 6 ist dargestellt, wie ein erfindungsgemäßes Systemmodul 1, das in dem Systemträger 16 befestigt ist, mit dem Systemträger 16 in einen Unterputzgehäuse 19 angeordnet ist. Hierbei ist zu erkennen, dass einerseits der Systemträger 16 an der Anlagefläche 14 anliegt und andererseits das erfindungsgemäße Systemmodul 1 mit dem Rahmenabschnitt 18 das Unterputzgehäuse 19 überragt, so dass durch eine Schattenfuge zwischen dem Ende des Unterputzgehäuses 19 und dem Systemmodul 1 erreicht wird. Zusätzlich ist zu erkennen, dass noch eine Dichtung 21 zwischen dem Unterputzgehäuse 19 und dem Rahmenabschnitt18 angeordnet sein kann. Zur Befestigung des Systemmoduls 1 innerhalb des Systemträgers 16 weist der Bodenansatz 17 in seinen Eckbereichen 22 derart schwenkbar gelagerte Fixierschieber 23 auf, dass diese in ihren Öffnungsstellung innerhalb der Umrisskontur des Bodenansatzes 17 liegen und in ihrer Fixierstellung, siehe Fig. 2, die Umrisskontur des Bodenansatzes 17 einendig überragen und den Systemträger 16 hintergreifen können. Wie aus Fig. 2 zu erkennen ist, weist ein erfindungsgemäßes Systemmodule 1 zweckmäßigerweise an einer festgelegten Stelle einer Seitenkante des Bodenansatzes 17 einen gegenüber dessen Umrisskontur vorstehenden Kodierfortsatz 24 auf. Bei jedem erfindungsgemäßen Systemmodul 1 befindet sich dieser Kodierfortsatz 24 an derselben Stelle. Dieser Kodierfortsatz 24 greift im montierten Zustand des erfindungsgemäßen Systemmoduls 1 im Systemträger 16 in eine Kodierausnehmung 26 des Systemträgers 16 ein. Wie insbesondere den Fig. 4 und 5 zu entnehmen ist, wird aus mehreren erfindungsgemäßen Systemmodulen 1 in Verbindung mit dem Systemträger 16 eine Systemmodulanordnung geschaffen, wobei der Systemträger 16 aus einem Systemrahmen 27 besteht, in dem mehrere quadratische, gleich große Rahmenöffnungen 28 ausgebildet sind. Diese Rahmenöffnungen 28 werden zweckmäßigerweise in einem Laserschneidverfahren insbesondere aus einem aus Edelstahlblech hergestellten Systemträger 16 ausgeschnitten. Hierdurch ergibt sich eine maßlich sehr genaue Ausführung des erfindungsgemäßen Systemträgers 16, wobei eventuelle Toleranzen derart ausgeglichen werden können, dass sie praktisch vollständig kompensiert werden können. Diese Rahmenöffnungen 28 können bei einer Ausführungsform eines erfindungsgemäßen Systemträgers 16 einspaltig hintereinanderliegend ausgebildet sein, wozu beispielsweise auf Fig. 4 verwiesen wird. Ebenfalls kann es zweckmäßig sein, die Rahmenöffnungen 28 in senkrecht zueinander verlaufenden Reihen und Spalten anzuordnen, wie dies beispielsweise in Fig. 5 dargestellt ist. Der Mittenabstand der Rahmenöffnungen 28 beträgt jeweils das sechsfache Rastermaß und die Seitenlänge der Rahmenöffnungen 28 beträgt jeweils das vierfache Rastermaß. Durch diese Ausbildung der Rahmenöffnungen 28 ergibt sich eine flächenbündige Anordnung der erfindungsgemäßen Systemmodule 1 innerhalb des Systemträgers 16, d. h. dass die Systemmodule 1 im montierten Zustand mit ihren Rahmenabschnitten 18 aneinanderliegend montiert sind, wobei ihre Oberflächen in derselben Ebene verlaufen.

Wie insbesondere aus den Fig. 4 und 5 zu erkennen ist, befinden sich die Kodierausnehmungen 26 jeweils immer an derselben Stelle im Randbereich der Rahmenöffnungen 28, so dass eine stets lagerichtige Ausrichtung der Systemmodule 1 im Systemträger 16 gewährleistet ist, d. h. die Systemmodule 1 haben im Systemträger 16 jeweils dieselbe Ausrichtung, was insbesondere in Bezug auf die Lage der Mehrfachkontakte 7, 8 wesentlich ist. Wie in den Fig. 3 und 4 zu erkennen ist, werden die Mehrfachkontakte 7 bzw. die Mehrfachkontakte 8 der jeweiligen Systemmodule 1 miteinander durch eine Busleitung 9, die als Stegleitung ausgebildet ist, verbunden, indem an der Busleitung 9 zu den Mehrfachkontakten 7 passende Mehrfachgegenkontakte 29 befestigt sind. Hierbei handelt es sich zweckmäßigerweise um Schneid-Klemmkontakte, die an der Busleitung 9 mit einem derartigen gegenseitigen Abstand befestigt sind, dass ihr Abstand insbesondere dem sechsfachen Rastermaß entspricht, was vorzugsweise im vorliegenden Fall 106,5 mm beträgt. Denn der Abstand der Mehrfachkontakte 7 zueinander und der Abstand der Mehrfachkontakte 8 zueinander entsprechen ebenfalls diesem Rastermaß. Demnach ist es erfindungsgemäß möglich, die Busleitungen 9 endlos vorzukonfektionieren und mit den jeweiligen Gegenkontakten 29 zu versehen und bei der Montage der erfindungsgemäßen Systemmodule 1 im Systemträger 16 kann die jeweilig benötigte Länge der Busleitungen 9 von der beispielsweise auf einer Rolle aufgewickelten erfindungsgemäßen Busleitung 9 abgeschnitten werden, und zwar entsprechend der Anzahl der benötigten Gegenkontakte 29, die der Anzahl der in einer Reihe bzw. einer Spalte liegenden Systemmodule 1 entspricht. Erfindungsgemäß ist nur noch eine Schnittstelle pro Systemmodul 1 in Reihen- bzw. Spaltenrichtung vorhanden und es ist nur eine durchgehende Busleitung 9 pro Reihe bzw. Spalte erforderlich. Hierdurch ergibt sich ein deutlicher Montagevorteil bei dem erfindungsgemäßen Systemmodul. In diesem Zusammenhang ist darauf zu verweisen, dass die Mehrfachkontakte 7, 8, die als Reihenkontakte ausgebildet sein, in Bezug auf ihre elektrische Belegung zueinander vorzugsweise um 90° drehsymmetrisch angeordnet sind.

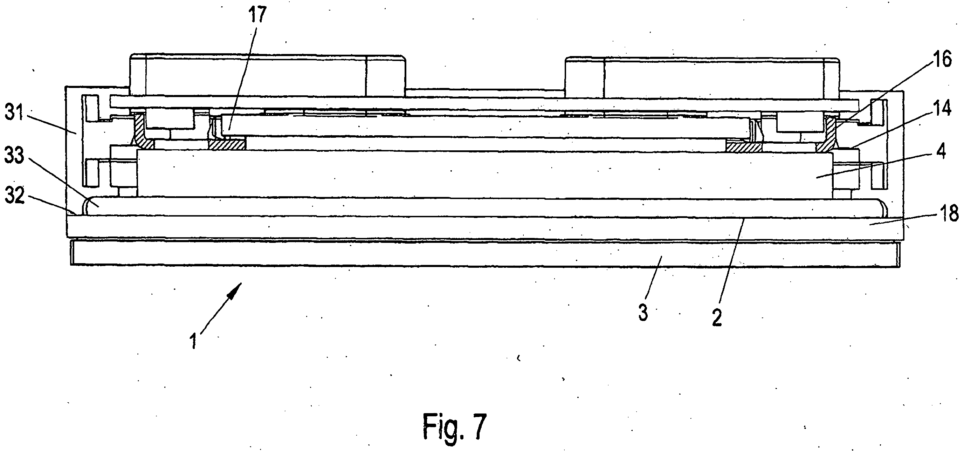

In Fig. 7.ist dargestellt, wie ein erfindungsgemäßer Systemträger 16 mit in ihm befestigten erfindungsgemäßen Systemmodulen 1 innerhalb eines Aufputzgehäuses 31 angeordnet ist. Bei dieser Montageart ergibt sich, dass das Aufputzgehäuse 31 mit seinem Umfangsrand 32 an der dem Aufputzgehäuse 31 zugekehrten Seite des Rahmenabschnittes 18 bündig anliegt. Dabei ist eine Gehäusedichtung 33 innerhalb einer Nut im Umfangsrand 32 des Aufputzgehäuses 31 angeordnet. Insofern entspricht die Breite des Aufputzgehäuses 31 dem sechsfachen Rastermaß und beträgt insbesondere 106,5 mm. Ein derartiges Aufputzgehäuse 31 ist dann für die einreihige Anordnung erfindungsgemäßer Systemmodule 1 geeignet. Für den Fall, dass eine mehrreihige Anordnung der Systemmodule 1 in einem Aufputzgehäuse 31 erforderlich ist, beträgt die Breite des Aufputzgehäuses 31 jeweils entsprechend der Anzahl der nebeneinanderliegenden Reihen dem mehrfachen sechsfachen Rastermaß.

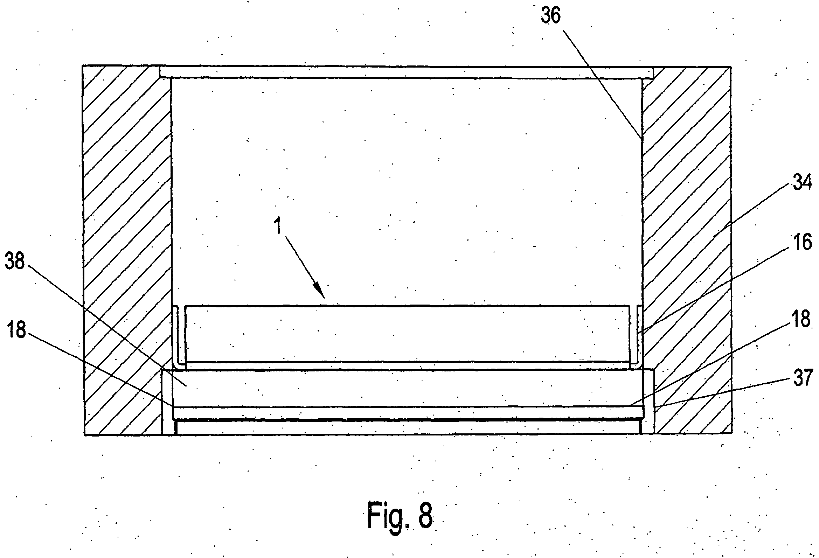

In Fig. 8 ist die Montage einer erfindungsgemäßen Systemmodulanordnung in einem freistehenden Gehäuse 34 dargestellt. Dieses freistehende Gehäuse 34 besitzt zwei hintereinanderliegende Öffnungsabschnitte 36, 37. Hierbei besitzt der Öffnungsabschnitt 36 eine Breite, die der Breite eines erfindungsgemäßen Systemträgers 16 entspricht, und der Öffnungsabschnitt 37 besitzt eine Breite, die der Breite eines erfindungsgemäßen Funktionsmoduls zusammen mit einer vorhandenen Fuge angepasst ist, so dass dieses erfindungsgemäße Funktionsmodul innerhalb des Öffnungsabschnitts 37 angeordnet werden kann.

In dieser Ausführungsform ist der Systemträger 16 derart dimensioniert, dass er mit seiner Anlagefläche 14 an der dem Systemträger 16 zugekehrten Unterseite des Rahmenabschnittes 18 anliegt. Gleichzeitig sitzt der Systemträger 16 innerhalb des Öffnungsabschnittes 36, wobei zwischen dem Systemträger 16 und der Unterseite des Rahmenabschnittes 18 eine Gehäusedichtung 38 angeordnet ist.

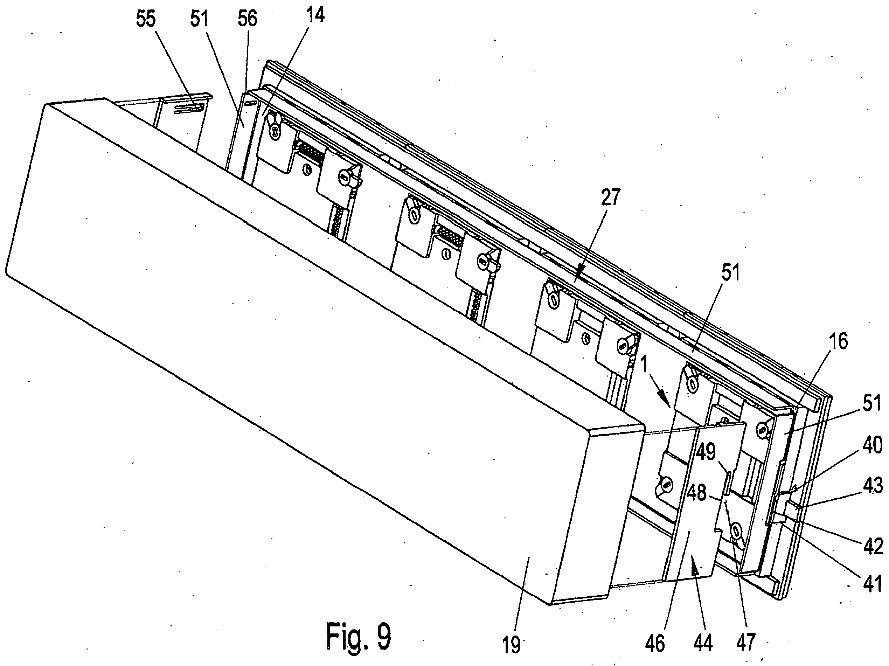

Wie aus Fig. 9 ersichtlich ist, ist es zweckmäßig, wenn der Systemträger 16 an einer Seite seines Systemrahmens 27 einen Verschlussriegel 40 aufweist, mit dem der Systemträger 16 beispielsweise in einem Aufnahmegehäuse derart angeordnet werden kann, dass er mittels des Verschlussriegels 40 in dem Aufnahmegehäuse, z. B. einem Unterputzgehäuse 19 mittels einer Formschlussverbindung mit einem Verschlussgegenstück 44 im Aufnahmegehäuse durch Verschiebung lösbar fixierbar ist. Dieser Verschlussriegel 40 ist auf der Anlagefläche 14 des Systemrahmens 27 mittels eines Lagerstegs 41 verschiebbar befestigt und durchgreift mit diesem einen Führungsschlitz 42 im Systemträger 16 und weist einen äußeren, parallel zum Bodenteil 4 verlaufenden Haltefortsatz 45 auf, an dem ein parallel zum Rahmenabschnitt 18 verlaufender Betätigungsfortsatz 43 angeformt ist. Dieser kann mittels eines Werkzeuges betätigt werden. Das Verschlussgegenstück 44 besteht aus einem im Unterputzgehäuse 19 angeordneten Verschlussblech 46, das eine teilweise randseitig offene Schlitzöffnung 47 aufweist. Im in das Unterputzgehäuse 19 eingesetzten Zustand des Systemrahmens 27 liegen die Schlitzöffnung 47 und der Führungsschlitz 42 deckungsgleich derart nebeneinander bzw. übereinander, dass der Lagersteg 41 durch die Schlitzöffnung 47 verläuft. Im entriegelten Zustand verläuft der Lagersteg 41 durch den randoffenen Öffnungsabschnitt 48 der Schlitzöffnung 47, und in die Verriegelungsstellung wird der Verschlussriegel 40 mit seinem Lagersteg 41 in den randseitig geschlossenen Abschnitt 49 der Schlitzöffnung 47 verschoben. Im eingesetzten Zustand des Systemrahmens 27 taucht dieser mit seinem zur Anlagefläche 14 senkrecht verlaufenden, abgebogenen Rahmenschenkel 51 in eine Haltenut 52 ein, die zwischen dem Verschlussblech 46 und einem Führungselement 53 am Verschlussblech 46 ausgebildet ist. Dem Verschlussblech 46 gegenüberliegend ist zweckmäßigerweise ein plattenförmiges Verschlussprofil 54 z. B. im Unterputzgehäuse 19 angeordnet, das zwei jeweils endseitige Federrastungen 55 aufweist, die im eingesetzten Zustand des Systemträgers 16 in endseitige Rastschlitze 56 im zugehörigen Rahmenschenkel 51 einrasten.

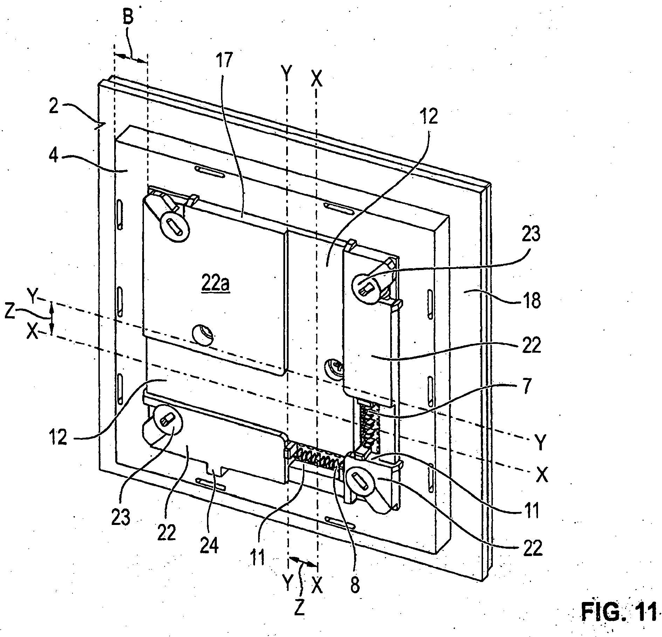

Wie in Fig. 11 dargestellt ist, können die Leitungskanäle 12 auch asymmetrisch in der Bodenfläche des Modulunterteils 2 angeordnet sein. Hierbei sind sie zweckmäßigerweise in der Bodenfläche des Bodenansatzes 17 angeordnet. Durch die asymmetrische Anordnung sind sie mit ihrer mittleren Längsachse X-X jeweils um ein Maß Z zu einer Mittelsenkrechten Y auf die Seitenkanten des Bodenansatzes 17 versetzt angeordnet. Durch diese Ausbildung der Leitungskanäle 12 ergibt sich ein in seiner Fläche vergrößerter Eckbereich 22a, so dass auf der dem Schaltungsträger 6 zugekehrten Seite des Bodenteils 4 eine vergrößerte Freifläche für auf dem Schaltungsträger 6 befindliche Bauelemente zur Verfügung steht.

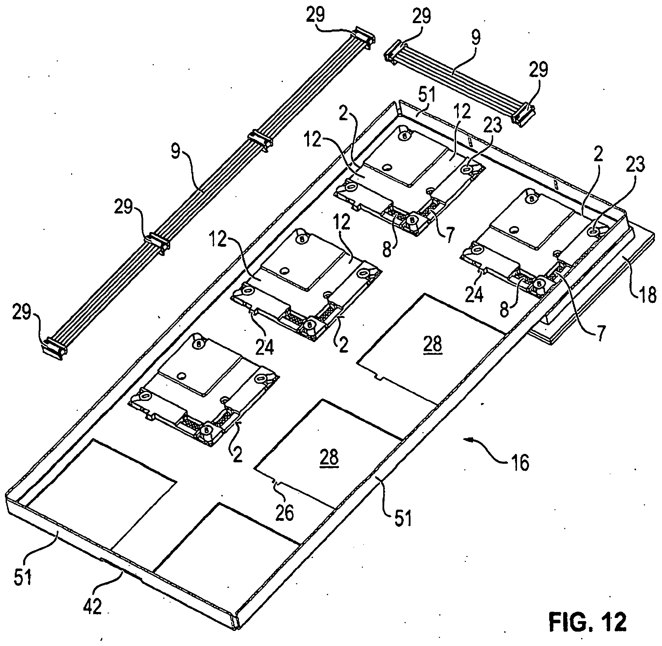

In Fig. 12 ist eine Ansicht auf eine Systemmodulanordnung entsprechend Fig. 5 gezeigt, jedoch unter Einsatz eines Systemmoduls gemäß Fig. 11. Im Übrigen wird, was die Ausbildung des Systemmoduls 1, insbesondere auch des Modulunterteils 2 gemäß Fig. 11 und der Systemmodulanordnung gemäß Fig. 12 betrifft, im vollen Umfange auf die Beschreibung der Fig. 1 bis 10 verwiesen, so dass die zu diesen Fig. beschriebenen vorteilhaften Ausführungsformen auch für die Ausbildung gemäß den Fig. 11 und 12 gilt.

## Patentansprüche

1. Systemmodul (1) für die Gebäudeelektroinstallation und Türkommunikation, bestehend aus einem Modulunterteil (2) und einem mit diesem lösbar verbundenen Funktionsoberteil (3), wobei das Modulunterteil (2) zum Befestigen an einem Systemträger (16) dient,
wobei das Modulunterteil (2) ein quaderförmiges Bodenteil (4) aufweist, in dem ein Schaltungsträger (6) mit seiner elektronischen Schaltung aufgenommen ist, wobei der Schaltungsträger (6) einseitig zwei Mehrfachkontakte (7, 8) für einen Anschluss einer Busleitung (9) aufweist und die Mehrfachkontakte (7, 8) derart elektrisch belegt sind, dass sie sowohl Eingangskontaktstellen als auch Ausgangskontaktstellen für eine elektrische Signalverarbeitung und eine Spannungsversorgung bilden, und wobei die Mehrfachkontakte (7, 8) über Öffnungen (11) im Bodenteil (4) zugänglich sind, wobei die Öffnungen (11) innerhalb sich rechtwinklig kreuzender Leitungskanäle (12) zur Aufnahme der Busleitungen (9) angeordnet sind und die Mehrfachkontakte (7, 8) senkrecht zur mittleren Längsachse (X-X) der Leitungskanäle (12) ausgerichtet sind, wobei die Leitungskanäle (12) derart angeordnet sind, dass sie eine Bodenfläche des Systemmoduls (1) mittig unterteilen oder asymmetrisch angeordnet sind, wobei sie mit ihrer mittleren Längsachse (X-X) jeweils um ein Maß (Z) zur Mittelsenkrechten (Y) auf Längsseiten des Modulunterteils (2) verlaufen.

2. Systemmodul (1) nach Anspruch 1,
**dadurch gekennzeichnet, dass** die Mehrfachkontakte (7, 8) als Reihenkontakte ausgebildet sind.

3. Systemmodul (1) nach Anspruch 1 oder 2,
**dadurch gekennzeichnet, dass** mindestens einer der Leitungskanäle (12) eine Tiefe besitzt, die einer zweifachen Dicke der als Stegleitung ausgebildeten Busleitung (9) entspricht.

4. Systemmodul (1) nach einem der Ansprüche 1 bis 3,
**dadurch gekennzeichnet, dass** das Bodenteil (4) eine an seinem Randbereich ausgebildete, umlaufende Anlagefläche (14) für den Systemträger (16) aufweist.

5. Systemmodul (1) nach einem der Ansprüche 1 bis 4,
**dadurch gekennzeichnet, dass** die Leitungskanäle (12) in einem gegenüber dem die Anlagefläche (14) bildenden Randbereich unter Ausbildung einer Stufe innerhalb eines vorstehenden Bodenansatzes (17) ausgebildet sind.

6. Systemmodul (1) nach Anspruch 5,
**dadurch gekennzeichnet, dass** die Stufenhöhe des Bodenansatzes (17) größer/gleich einer Materialdicke des an der Anlagefläche (14) anliegenden Systemträgers (16) ist.

7. Systemmodul (1) nach einem der Ansprüche 1 bis 6,
**dadurch gekennzeichnet, dass** der vorstehende Bodenansatz (17) eine quadratische Form besitzt und seine Bodenfläche derart bemessen ist, dass sie in sechzehn gleich große quadratische Teilflächen unterteilt werden kann, wobei die Seitenkahtenfläche jeder Teilfläche einem modulspezifischen Rastermaß entspricht.

8. Systemmodul (1) nach Anspruch 7,
**dadurch gekennzeichnet, dass** die Seitenkantenlänge der Teilflächen bzw. das Rastermaß 17,75 mm beträgt.

9. Systemmodul (1) nach einem der Ansprüche 4 bis 8,
**dadurch gekennzeichnet, dass** die Breite (B) der Anlagefläche (14) mindestens dem halben Rastermaß, insbesondere 8,875 mm entspricht.

10. Systemmodul (1) nach einem der Ansprüche 4 bis 9,
**dadurch gekennzeichnet, dass** das Modulunterteil (2) einen umfangsgemäßen Rahmenabschnitt (18) aufweist, der gegenüber dem quaderförmigen Bodenteil (4) allseitig um ein einheitliches Überstandsmaß (C) übersteht.

11. Systemmodul (1) nach Anspruch 10,
**dadurch gekennzeichnet, dass** die Summe aus dem Überstandsmaß (C) und der Breite (B) des Randbereichs bzw. der Anlagefläche (14) dem Rastermaß, insbesondere 17,75 mm entspricht.

12. Systemmodul (1) nach einem der Ansprüche 2 bis 11,
**dadurch gekennzeichnet, dass** die als Reihenkontakte ausgebildeten Mehrfachkontakte (7, 8) in Bezug auf ihre elektrische Belegung zueinander um 90° drehsymmetrisch angeordnet sind.

13. Systemmodul (1) nach einem der Ansprüche 1 bis 12,
**dadurch gekennzeichnet, dass** der Bodenansatz (17) in seinen Eckbereichen derart schwenkbar gelagerte Fixierschieber (23) aufweist, dass diese in ihrer Öffnungsstellung innerhalb einer Umrisskontur des Bodenansatzes (17) liegen und in ihrer Fixierstellung die Umrisskontur des Bodenansatzes (17) einendig überragen.

14. Systemmodul (1) nach einem der Ansprüche 1 bis 13,
**dadurch gekennzeichnet, dass** an einer festgelegten Seitenkante des Bodenansatzes (17) ein gegenüber dieser vorstehender Kodieransatz (24) ausgebildet ist, der in eine Kodierausnehmung (26) im Systemträger (16) im montierten Zustand hineinragt.

15. Systemmodul (1) nach einem der Ansprüche 1 bis 14,
**dadurch gekennzeichnet, dass** die Leitungskanäle (12) derart angeordnet sind, dass sie eine Bodenfläche des Modulunterteils (2) mittig unterteilen, wobei sie mit ihrer mittleren Längsachse (X-X) jeweils um ein Maß (Z) zur Mittelsenkrechten (Y) auf Längsseiten des Bodenansatzes (17) verlaufen.

16. Systemanordnung aus mehreren Systemmodulen (1) nach einem oder mehreren der Ansprüche 7 bis 15,
**dadurch gekennzeichnet, dass** die Busleitungen (9) als Stegleitungen ausgebildet sind, und mit zu den Mehrfachkontakten (7, 8) der Systemmodule (1) korrespondierenden Mehrfach-Gegenkontakten (29) versehen sind, die mit einem gegenseitigen Abstand, der dem sechsfachen Rastermaß entspricht, befestigt sind, und insbesondere als Schneid-Klemmkontakte ausgebildet sind.

17. Systemanordnung aus mehreren Systemmodulen (1) gemäß einem oder mehreren der Ansprüche 7 bis 15, insbesondere nach Anspruch 16,
**dadurch gekennzeichnet, dass** der Systemträger (16) aus einem Systemrahmen (27) besteht, in dem mehrere quadratische, gleich große Rahmenöffnungen (28) in Reihe liegend ausgebildet sind, deren Mittenabstand dem sechsfachen Rastermaß und deren Seitenlänge dem vierfachen Rastermaß entspricht, wobei der Systemträger (16) einen umfänglichen Randabschnitt an jeder Rahmenöffnung (28) als Anlagebereich aufweist.

18. Systemmodulanordnung nach Anspruch 17,
**dadurch gekennzeichnet, dass** die Rahmenöffnungen (28) in zueinander senkrechten Reihen und Spalten in dem Systemträger (16) angeordnet sind.

19. Systemmodulanordnung nach Anspruch 17 oder 18,
**dadurch gekennzeichnet, dass** die Kodierausnehmungen (26) und die Kodierfortsätze (24) an jedem Systemmodul (1) und jeder Rahmenöffnung (28) an derselben Stelle angeordnet sind.

20. Systemmodulanordnung nach einem der Ansprüche 17 bis 19,
**dadurch gekennzeichnet, dass** der Systemträger (16) an einer Seite seines Systemrahmens (27) einen Verschlussriegel (40) aufweist, der mit einem Verschlussgegenstück (45) in einem Aufnahmegehäuse (19) für den Systemträger (16) derart durch Verschiebung zusammenwirkt, dass in einer Verschlussstellung eine Formschlussverbindung gegeben ist.

## Claims

1. System module (1) for electrical installations and door communication systems of buildings, consisting of a module bottom part (2) and a functional top part (3) releasably connected thereto, the module bottom part (2) allowing fastening to a system support-piece (16), the module bottom part (2) having a square-shaped base part (4) inside which a circuit board (6) with its electronic circuit is housed, the circuit board (6) on one side having two multiple contacts (7, 8) for connection of a bus cable (9) and the multiple contacts (7, 8) being electrically assigned in such a way that they form both input contact points as well as output contact points for electrical signal processing and a voltage supply, and the multiple contacts (7, 8) being accessible via openings (11) in the base part (4), wherein the openings (11) are arranged within cable ducts (12) for receiving the bus cables (9), which ducts intersect each other at right angles, and the multiple contacts (7, 8) are oriented perpendicularly with respect to the central longitudinal axis (X-X) of the cable ducts (12), wherein the cable ducts (12) are arranged in such a way that they centrally subdivide a base area of the system module (1) or are arranged asymmetrically, wherein they run on longitudinal sides of the module bottom part (2) with their central longitudinal axis (X-X) in each case at a distance (Z) in relation to the mid-perpendicular (Y).

2. System module (1) according to Claim 1,
**characterized in that** the multiple contacts (7, 8) are formed as series contacts.

3. System module (1) according to Claim 1 or 2,
**characterized in that** at least one of the guide ducts (12) has a depth which corresponds to twice the thickness of the bus cable (9) formed as a ribbon cable.

4. System module (1) according to one of Claims 1 to 3,
**characterized in that** the base part (4) has, formed in its edge region, a surrounding contact surface (14) for the system support-piece (16).

5. System module (1) according to one of Claims 1 to 4,
**characterized in that** the cable ducts (12) are formed within an edge region of a contact surface (14) being part of a protruding base extension (17), where the cable ducts (12) are formed by a step within the base extension (17).

6. System module (1) according to Claim 5,
**characterized in that** the step height of the base extension (17) is greater than / the same as a material thickness of the system support-piece (16) adjoining the contact surface (14).

7. System module (1) according to one of Claims 1 to 6,
**characterized in that** the projecting base extension (17) has a square shape and its base area is dimensioned in such a way that it may be subdivided into sixteen equal-size square partial areas, the side edge area of each partial area corresponding to a module-specific grid dimension.

8. System module (1) according to Claim 7,
**characterized in that** the side edge length of the partial areas or the grid dimension is equal to 17.75 mm.

9. System module (1) according to one of Claims 4 to 8,
**characterized in that** the width (B) of the contact surface (14) corresponds to at least half the grid dimension, in particular 8.875 mm.

10. System module (1) according to one of Claims 4 to 9,
**characterized in that** the module bottom part (2) has a frame portion (18) along the circumference which projects with respect to the square-shaped base part (4) on all the sides by a uniform projecting distance (C).

11. System module (1) according to Claim 10,
**characterized in that** the sum of the projecting distance (C) and the width (B) of the edge region or contact surface (14) corresponds to the grid dimension, in particular 17.75 mm.

12. System module (1) according to one of Claims 2 to 11,
**characterized in that** the multiple contacts (7, 8) formed as series contacts are arranged, as regards their electrical assignment, in a 90° rotationally symmetrical manner relative to each other.

13. System module (1) according to one of Claims 1 to 12,
**characterized in that** the base extension (17) has fixing sliders (23) mounted pivotably in its corner regions in such a way that in their open position they lie within an external contour of the base extension (17) and in their fixing position they protrude with one end beyond the external contour of the base extension (17).

14. System module (1) according to one of Claims 1 to 13,
**characterized in that** a coding lug (24) is formed on a given side edge of the base extension (17), projecting with respect thereto, and in the assembled condition projects into a coding recess (26) in the system support-piece (16).

15. System module (1) according to one of Claims 1 to 14,
**characterized in that** the cable ducts (12) are arranged in such a way that they centrally subdivide a base area of the module bottom part (2), wherein they run on longitudinal sides of the base extension (17) with their central longitudinal axis (X-X) in each case at a distance (Z) in relation to the mid-perpendicular (Y).

16. System arrangement consisting of several system modules (1) according to one or more of Claims 7 to 15,
**characterized in that** the bus cables (9) are formed as ribbon cables and are provided with multiple counter-contacts (29) which correspond to the multiple contacts (7, 8) of the system modules (1) and which are fastened at a mutual distance which corresponds to six times the grid dimension and in particular are formed as insulation displacement contacts.

17. System arrangement consisting of several system modules (1) according to or more of Claims 7 to 15, in particular according to Claim 16,
**characterized in that** the system support-piece (16) consists of a system frame (27) in which several, square, equal-size frame openings (28) are formed in sequence, the centre-to-centre distance of which openings corresponds to six times the grid dimension and the side length of which corresponds to four times the grid dimension, the system support-piece (16) having a circumferential edge portion on each frame opening (28) acting as contact region.

18. System module arrangement according to Claim 17,
**characterized in that** the frame openings (28) are arranged in the system support-piece (16) in rows and columns which are perpendicular to each other.

19. System module arrangement according to Claim 17 or 18,
**characterized in that** the coding recesses (26) and the coding extensions (24) are arranged on each system module (1) and each frame opening (28) in the same position.

20. System module arrangement according to one of Claims 17 to 19,
**characterized in that** the system support-piece (16) has on one side of its system frame (27) a locking latch (40) which cooperates by means of displacement with a locking counter-piece (45) in a housing (19) for the system support-piece (16) in such a way that a form-locking connection is provided in a locking position.

## Revendications

1. Module de système (1) pour l'installation électrique de bâtiment et la communication de porte, constitué d'une partie inférieure de module (2) et d'une partie supérieure fonctionnelle (3) reliée à cette dernière de manière amovible, dans lequel la partie inférieure de module (2) sert à la fixation au niveau d'un support de système (16), dans lequel la partie inférieure de module (2) présente une partie de fond (4) de forme carrée, dans laquelle un support de circuit (6) pourvu de son circuit électronique est logé, dans lequel le support de circuit (6) présente d'un côté deux contacts multiples (7, 8) pour un raccordement d'une ligne de bus (9) et dans lequel les contacts multiples (7, 8) sont chargés électriquement de telle manière qu'ils forment aussi bien des points de contact d'entrée que des points de contact de sortie pour un traitement électrique de signal et pour une alimentation en tension, et dans lequel les contacts multiples (7, 8) sont accessibles par l'intermédiaire d'ouvertures (11) dans la partie de fond (4), les ouvertures (11) étant disposées à l'intérieur de canaux de ligne (12) se croisant à angle droit, servant à recevoir des lignes de bus (9), et les contacts multiples (7, 8) étant orientés de manière perpendiculaire à l'axe longitudinal (X-X) central des canaux de ligne (12), les canaux de ligne (12) étant disposés de telle sorte qu'ils divisent centralement une surface de fond du module de système (1) ou qu'ils soient disposés asymétriquement, les canaux de ligne s'étendant avec leur axe longitudinal (X-X) central à chaque fois d'une dimension (Z) par rapport à la médiatrice (Y) sur des côtés longitudinaux de la partie inférieure de module (2).

2. Module de système (1) selon la revendication 1,
**caractérisé en ce que** les contacts multiples (7, 8) sont réalisés sous la forme de contacts en série.

3. Module de système (1) selon la revendication 1 ou 2,
**caractérisé en ce qu'**au moins un des canaux de ligne (12) présente une profondeur qui correspond à une épaisseur égale à deux fois l'épaisseur de la ligne de bus (9) réalisée sous la forme d'un fil plat pour installations intérieures.

4. Module de système (1) selon l'une quelconque des revendications 1 à 3,
**caractérisé en ce que** la partie de fond (4) présente une face d'appui (14) périphérique réalisée au niveau de sa zone de bord pour le support de système (16).

5. Module de système (1) selon l'une quelconque des revendications 1 à 4,
**caractérisé en ce que** les canaux de ligne (12) sont réalisés dans une zone de bord formant la surface d'appui (14) d'un appendice de fond (17) en saillie, et les canaux de ligne (12) sont formés par un palier dans l'appendice de fond (17).

6. Module de système (1) selon la revendication 5,
**caractérisé en ce que** la hauteur de palier de l'appendice de fond (17) est plus grande/égale à une épaisseur de matériau du support de système (16) reposant au niveau de la surface d'appui (14).

7. Module de système (1) selon l'une quelconque des revendications 1 à 6,
**caractérisé en ce que** l'appendice de fond (17) faisant saillie présente une forme carrée et **en ce que** sa surface de fond présente des dimensions telles qu'elle peut être divisée en seize faces partielles carrées de même dimension, dans lequel la face d'arête latérale de chaque face partielle correspond à une cote modulaire spécifique au module.

8. Module de système (1) selon la revendication 7,
**caractérisé en ce que** la longueur d'arête latérale des faces partielles ou la cote modulaire est égale à 17,75 mm.

9. Module de système (1) selon l'une quelconque des revendications 4 à 8,
**caractérisé en ce que** la largeur (B) de la face d'appui (14) correspond au moins à la moitié de la cote dimensionnelle, est égale en particulier à 8,875 mm.

10. Module de système (1) selon l'une quelconque des revendications 4 à 9,
**caractérisé en ce que** la partie inférieure de module (2) présente une section de cadre (18) périphérique, qui dépasse de toutes parts d'une cote de dépassement (C) unique par rapport à la partie de fond (4) de forme carrée.

11. Module de système (1) selon la revendication 10,
**caractérisé en ce que** la somme de la cote de dépassement (C) et de la largeur (B) de la zone de bord ou de la face d'appui (14) correspond à la cote modulaire, en particulier à 17,75 mm.

12. Système modulaire (1) selon l'une quelconque des revendications 2 à 11,
**caractérisé en ce que** les contacts multiples (7, 8) réalisés sous la forme de contacts en série sont disposés par rapport à leur charge électrique les uns par rapport aux autres de manière symétrique en rotation selon un angle de 90°.

13. Module de système (1) selon l'une quelconque des revendications 1 à 12,
**caractérisé en ce que** l'appendice de fond (17) présente dans ses zones d'angle des coulisseaux de fixation (23) montés de manière à pouvoir pivoter de telle sorte qu'ils se trouvent dans leur position d'ouverture à l'intérieur d'un contour de l'appendice de fond (17) et dépassent au niveau d'une extrémité, dans leur position de fixation, le contour de l'appendice de fond (17).

14. Module de système (1) selon l'une quelconque des revendications 1 à 13,
**caractérisé en ce qu'**un appendice de codage (24) faisant saillie par rapport à l'appendice de fond (17) est réalisé au niveau d'une arête latérale spécifiée de ce dernier, lequel appendice de codage dépasse à l'intérieur d'un évidement de codage (26) dans le support de système (16) dans l'état monté.

15. Module de système (1) selon l'une quelconque des revendications 1 à 14,
**caractérisé en ce que** les canaux de ligne (12) sont disposés de telle sorte qu'ils divisent centralement une surface de fond de la partie inférieure de module (2), les canaux de ligne s'étendant avec leur axe longitudinal (X-X) central à chaque fois d'une dimension (Z) par rapport à la médiatrice (Y) sur des côtés longitudinaux de l'appendice de fond (17).

16. Ensemble de système constitué de plusieurs modules de système (1) selon l'une quelconque des revendications 7 à 15,
**caractérisé en ce que** les lignes de bus (9) sont réalisées sous la forme de fils plats pour installations intérieures et sont pourvues de contacts complémentaires multiples (29) correspondant aux contacts multiples (7, 8) des modules de système (1), lesquels sont fixés à une distance mutuelle correspondant à six fois la cote modulaire, et sont réalisés en particulier sous la forme de contacts de serrage de coupe.

17. Ensemble de système constitué de plusieurs modules de système (1) selon l'une quelconque ou plusieurs des revendications 7 à 15, en particulier selon la revendication 16, **caractérisé en ce que** le support de système (16) est constitué d'un cadre de système (27), dans lequel plusieurs ouvertures de cadre (28) carrées de même dimension sont réalisées de manière alignée, dont la distance au centre correspond à six fois la cote modulaire et donc la longueur latérale correspond à quatre fois la cote modulaire, dans lequel le support de système (16) présente, en tant que zone d'appui, une section de bord périphérique au niveau de chaque ouverture de cadre (28).

18. Ensemble de module de système selon la revendication 17,
**caractérisé en ce que** les ouvertures de cadre (28) sont disposées dans le support de système (16) dans des rangées et colonnes perpendiculaires les unes par rapport aux autres.

19. Ensemble de module de système selon la revendication 17 ou 18,
**caractérisé en ce que** les évidements de codage (26) et les prolongements de codage (24) sont disposés au niveau de chaque module de système (1) et au niveau de chaque ouverture de cadre (28) au même emplacement.

20. Ensemble de module de système selon l'une quelconque des revendications 17 à 19,
**caractérisé en ce que** le support de système (16) présente, au niveau d'un côté de son cadre de système (27), un verrou de fermeture (40), qui coopère avec une pièce complémentaire de fermeture (45) dans un boîtier de logement (19) pour le support de système (16) par déplacement par coulissement de telle manière qu'un assemblage par complémentarité de forme est obtenu dans une position de fermeture.
